# EUROPEAN PATENT APPLICATION

(11) **EP 4 796 986 A1**
(43) Date of publication of application: **26.08.2026**
(21) Application number: 26157467.7
(22) Date of filing: 10.02.2026
(51) Int. Cl.: G02F 1/025, G02F 1/21, G02F 1/225

(54) **OPTICAL WAVEGUIDE MODULATOR WITH SELECTIVELY REMOVED SUBSTRATE**

(30) Priority: 19.02.2025 US 202519057165
(71) Applicant: Nokia Solutions and Networks Oy, 02610 Espoo (FI)
(72) Inventor: AIMONE, Alessandro, Berlin (DE); EARNSHAW, Mark, Berkeley Heights, NJ (US)
(74) Representative: Nokia EPO representatives

(57) **Abstract**

An integrated circuit includes a substrate having a main surface and an electrical transmission line extending along the main surface. The electrical transmission line includes a metallic travelling wave electrode (TWE) having a lengthwise sequence of spaced apart openings absent of the metallic material. The substrate has cavities under at least some of the openings. In an example implementation, the TWE is a middle electrode of an electrical transmission line driving an MZM, and the cavities in the substrate extend under side electrodes of the transmission line.

## Description

### TECHNICAL FIELD

The present invention relates to integrated electro-optical modulators.

### BACKGROUND

Data center interconnects and broad-band telecom networks make use of optical communication modules to process the high data rates of internet traffic. Optical transceiver (TRx) capable of high data rates typically use RF-driven Mach-Zehnder modulators (MZMs). Using thin-film optical materials having a large Pockels effect, such as e.g. thin-film lithium niobate (LiNbO3, "TFLN"), in the waveguide arms of an MZM enables providing data rates in excess of 100 Gigabit/second (Gbps) while controlling for power consumption. A TFLN modulator combining superior electro-optic properties of lithium niobate with silicon photonics (SiP) may be implemented as a photonic integrated circuit (PIC) in a SiP chip. Advantageously, SiP can utilize mature CMOS processes to fabricate highly integrated optical circuits on a silicon substrate, allowing SiP PICs to be mass produced at relatively low cost. The high permittivity of the silicon substrate in TFLN wafers may slow down the electrical wave and complicate matching propagation velocities of the electrical and optical waves in the MZM.

### SUMMARY

Embodiments described herein relate to photonic PICs incorporating electrical transmission lines disposed upon a substrate having periodically removed portions.

According to an example embodiment, provided is an apparatus comprising an integrated circuit. The integrated circuit comprises a substrate having a main surface and an electrical transmission line extending along the main surface. The electrical transmission line comprises a first travelling wave electrode (TWE), the first TWE comprising metallic material, and a lengthwise sequence of spaced apart openings absent of the metallic material, wherein the substrate has cavities under at least some of the openings.

In at least some implementations, the cavities extend laterally beyond the openings.

In any of the above implementations, the first TWE may comprise a sequence of split electrode segments, each split electrode segment comprising a pair of split metallic branches bounding one of the openings.

In any of the above implementations, the first TWE may be wider in the split electrode segments than between the split electrode segments.

In any of the above implementations, the electrical transmission line may comprise at least one second TWE extending along the first TWE. In some of such implementations, the cavities may extend under the second TWE.

In any of the above implementations, the electrical transmission line may comprise a pair of second TWEs extending along the first TWE at opposite sides thereof. In some of such implementations, the cavities extend under the second TWE.

In any of the above implementations, the integrated circuit may be a photonic integrated circuit (PIC). In some implementations, the PIC may comprise a Mach-Zehnder modulator (MZM), the MZM comprising two optical waveguide arms and the electrical transmission line. In some of such implementations, the substrate may comprise semiconductor material. In some of such implementations, the semiconductor material is silicon. In some of such implementations, the optical waveguide arms of the MZM may comprise lithium niobate.

In any of the above implementations, wherein the electrical transmission line comprises a pair of second TWEs extending along the first TWE at opposite sides thereof, the first TWE may be between the two optical waveguide arms of the MZM, and the two optical waveguide arms of the MZM may be between the second TWEs. In any such implementations, the electrical transmission line may be capacitively loaded by a plurality of metallic T-rail structures disposed to modulate light propagating in the optical waveguide arms. At least some of the metallic T-rail structures may project from parts of the first TWE bounding at least some of the openings.

Any of the above implementations may comprise a buffer layer between the substrate and the electrical transmission line, the openings extending through the buffer layer. In some of such implementations, the cavities may extend under the buffer layer.

A related aspect of the present disclosure provides a method comprising fabricating an electrical transmission line extending along a main surface of a substrate, the electrical transmission line comprising a first travelling wave electrode (TWE), the first TWE comprising metallic material and a lengthwise sequence of spaced apart openings that are absent of the metallic material. The method further comprises removing parts of the substrate through the openings to form cavities in the substrate.

In at least some implementations of the method, the removing may be performed such that the cavities extend laterally beyond the first TWE. In at least some of the implementations, the removing comprises etching the substrate through the openings in the first TWE.

### BRIEF DESCRIPTION OF THE DRAWINGS

Embodiments disclosed herein will be described in greater detail with reference to the accompanying drawings which represent preferred embodiments thereof, in which like elements are indicated with like reference numerals, and wherein:
FIG. 1A is a top view of an example planar travelling-wave electrode (TWE) having a lengthwise sequence of openings for substrate undercutting;
FIG. 1B is a schematic vertical cross-sectional view of the TWE of FIG. 1A between the electrode openings, along the "A-A" line in FIG. 1A;
FIG. 1C is a schematic vertical cross-sectional view of the TWE of FIG. 1A through one of the electrode openings along the "B-B" line in FIG. 1A;
FIG. 2 is a top view of an example integrated MZM driven by a three-electrode electrical transmission line (ETL) having a lengthwise sequence of openings in a middle TWE of the ETL;
FIG. 3A is a top view of an example integrated MZM driven by a capacitively loaded (CL) ETL having a segmented middle TWE including a sequence of split electrode segments;
FIG. 3B is a diagram illustrating a vertical cross-section of the CL-ETL of FIG. 3A through one of the split-electrode segments, along the "A-A" line in FIG. 3A;
FIG. 3C is a diagram illustrating a vertical cross-section of the CL-ETL of FIG. 3A through a straight connecting segment of the middle TWE, along the "B-B" line in FIG. 3A;
FIG. 4 is a diagram illustrating a vertical cross-section of the CL-ETL of FIG. 3A through one of the split-electrode segments of the middle TWE for an implementation with a top dielectric layer;
FIG. 5 is a diagram illustrating a vertical cross-section of the CL-ETL of FIG. 3A through one of the split-electrode segments of the middle TWE for an implementation with a vertical offset between the optical waveguide arms and the CL-ETL;
FIG. 6 is a diagram illustrating a vertical cross-section of the CL-ETL of FIG. 3A through one of the split-electrode segments of the middle TWE for an implementation including a residual TFLN layer between shallow-ridge cores of the optical waveguide arms of the MZM;
FIG. 7 is a flowchart of a method for fabricating a TWE with openings for substrate undercutting;
FIGs. 8A-8E are schematic partial cross-sectional views of a photonic PIC with substrate undercutting through electrode openings at different fabrication stages thereof.

### DETAILED DESCRIPTION OF SOME SPECIFIC EMBODIMENTS

In the following description, for purposes of explanation and not limitation, specific details are set forth, such as particular circuits, circuit components, techniques, etc. in order to provide a thorough understanding of the described specific embodiments. However, it will be apparent to one skilled in the art that the present invention may be practiced in other embodiments that depart from these specific details. In other instances, detailed descriptions of well-known methods, devices, and circuits may be omitted so as not to obscure the certain implementation details of the described specific embodiments. All statements herein reciting principles, aspects, and specific described embodiments, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Furthermore, the following abbreviations and acronyms may be used in the present document:
"CMOS" Complementary Metal-Oxide-Semiconductor
"EO" Electro-Optical
"LN" Lithium Niobate
"TFLN" Thin Film Lithium Niobate
"IC" Integrated Circuit
"PIC" Photonic Integrated Circuit
"MZM" Mach-Zehnder Modulator
"RF" Radio Frequency
"SOI" Silicon on Insulator
"SiP" Silicon Photonics
"ETL" Electrical Transmission Line
"TW" Travelling Wave
"TWE" Travelling Wave Electrode
"CL-TWE" Capacitively Loaded TWE

Note that as used herein, the terms "first", "second" and so forth are not intended to imply sequential ordering, but rather are intended to distinguish one element from another, unless explicitly stated. Similarly, sequential ordering of method steps does not imply a requirement of sequential order of their execution, unless explicitly stated. The phrase "such as", when preceded by a comma ("... , such as ..."), means that the nouns introduced by "such as" must be understood as examples, not as definitions. In other words, the phrase "such as", when preceded by a comma, is synonymous with "e.g." or "for example". The term "vertical" refers to a direction generally perpendicular to a main surface of a substrate along which relevant integrated circuitry is disposed. The term "horizontal" refers to a direction along the main surface of the substrate. The terms "above" and "below" refer to a greater or smaller distance from a substrate of a chip being described, respectively, and are not related to an orientation of the chip in space. I.e., a layer that is farther away from the substrate than some other layer is said to be above that other layer. Conversely, a layer that is closer to the substrate than some other layer is said to be below that other layer. Similarly, the terms "vertical" and "horizontal" refer to directions perpendicular to a substrate of a chip being described and along the substrate, respectively, and are not related to an orientation of the chip in space. The term "RF" (radio frequency) as used herein refers to frequencies in the 1 MHz to 300 THz range. The term "travelling wave", or "TW", as used herein refers to a structure, e.g. an electrode, which length exceeds a typical wavelength of an electrical RF wave that may be propagating therealong in operation.

The present disclosure describes examples of integrated circuits (IC) comprising electrical transmission lines (ETL). In at least some of the examples, an electrical transmission line is a part of a photonic integrated circuit (PIC), such as, but not exclusively, a silicon photonic (SiP) PIC, and is configured for driving a traveling-wave (TW) Mach-Zehnder modulator (MZM). Typically, an ETL of a TW-MZM should be configured to satisfy impedance matching and velocity matching requirements. The high permittivity of semiconductor substrates, e.g., silicon, may slow down the electrical waves propagating along the ETL, complicating matching the speed of the electrical wave along the ETL to the speed of the optical wave propagating in the optical waveguide arms of the MZM. Furthermore, a semiconductor substrate may absorb some of the energy of the electrical wave propagating along the ETL, causing an excess loss of the electrical wave energy. The example ETLs described below mitigate one or more of these problems by using TW electrodes (TWEs) with a sequence of relatively large openings through which portions of the substrate material under the ETL may be removed ("substrate undercutting"), while maintaining the mechanical stability and compact geometry of the ETL.

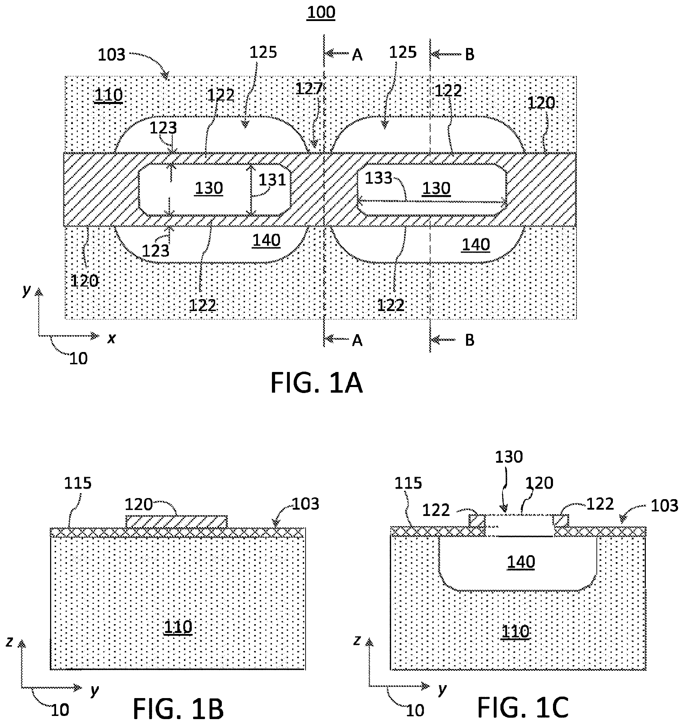

Example TWEs may be described below with reference to a cartesian coordinate system (X,Y,Z) 10 (FIGs. 1A-6, 8A-8E), which (X,Y) plane is parallel to a main surface of the substrate upon which the TWE is disposed. The X-axis of the coordinate system 10 is directed along the length of the TWE being described, and the corresponding direction may be referred to herein as the longitudinal direction. The direction of the Y-axis of the coordinate system 10 may be referred to herein as the lateral direction, while the direction of the Z-axis of the coordinate system 10 may be referred to herein as the transverse direction or the vertical direction.

FIG. 1A illustrates a schematic plan view of a portion of an integrated circuit (IC) 100 including an example metallic TW electrode (TWE) 120. The TWE 120 is located along a main surface 103 of a substrate 110 and may extend beyond the portion of the IC 100 shown in FIG. 1A. The TWE 120 may be a part of an ETL that includes one or more other electrodes extending along the TWE 120, which are not shown in FIG. 1A. The TWE 120 includes a sequence of openings 130 that are absent of the metallic material that comprises the TWE 120. The openings 130, two of which are shown in FIG. 1A, are spread lengthwise along the TWE 120 at some distance from each other. Each of these openings 130 are bounded at the TWE 120 edges by metallic branches 122 of the TWE 120, with the spacing between the branches 122 defining the width 131 of the openings 130. Segments of the TWE 120 that include an opening 130 may be referred to herein as the split electrode segments 125 and segments of the TWE 120 which do not include an opening 130 may be referred to herein as the connecting electrode segments 127. The width 131 and a length 133 of the openings 130 may be sufficiently large, e.g. more than 10 microns (µm) each, to allow for the removal of a large portion of the substrate 110 underneath the openings 130 by a suitable etching technique. In some implementations, the length 133 of the openings 130 may be smaller than any wavelength λ_{RF} of RF signals that may propagate along the TWE 120 within an operating RF bandwidth of the IC 100. The removal of the substrate material via the openings 130 leaves a cavity 140 in the substrate 110 underneath the openings 130. By using a suitable etching technique, the cavities 140 may controllably extend well beyond the openings 130 along the surface 103, in both the lateral (Y-axis) and longitudinal (X-axis) directions, undercutting parts of the TWE 120 between the openings 130. In some implementations, the cavities 140 may be formed using an isotropic etching technique. In some implementations, the cavities 140 may be formed using an anisotropic etch, and different directions in the substrate material may be etched at different speeds. The spacing between adjacent openings 130 along the length of the TWE 120 (X-axis, "longitudinal direction") may be such that the cavities 140 in the substrate 110 do not merge, and the TWE 120 is supported by the substrate 110 between the openings 130.

FIGs. 1B and 1C illustrate vertical cross-sections of an example implementation of the IC 100 along the lines "A-A" and "B-B", respectively, indicated in FIG. 1A. In the illustrated example, the IC 100 includes a buffer layer 115 disposed over the substrate 110, with the TWE 120 disposed over the buffer layer 115. In FIG. 1C, elements that are located behind the plane of the cross-section are indicated by dotted lines. The substrate 110 may be, e.g., a semiconductor substrate, and the buffer layer 115 is a layer of dielectric material insulating the TWE 120 from the substrate 110. In an example implementation, the substrate 110 is a silicon substrate, and the buffer layer 115 is a layer of silicon dioxide, e.g., a buried oxide (BOX) layer of a SOI platform. The IC 100 may be fabricated, e.g., by i) patterning a metallic layer to form the TWE 120 having the openings 130, ii) etching away the buffer layer 115 through the openings 130, and iii) undercutting the material (e.g., silicon) of the substrate 110 through the openings 130 under the buffer layer 115 to form the cavities 140, using a suitable isotropic or anisotropic etch. It may also be possible to fabricate the IC 100 by patterning the buffer layer 115 to define an opening (e.g., 130) therein, followed by etching the substrate 110 through the opening in the buffer layer 115 to form the cavity 140, which may be, in turn, followed by a deposition of the metallic layer over the patterned buffer layer 115, and patterning the metallic layer to define the TWE 120 having the opening 130 extending therethrough.

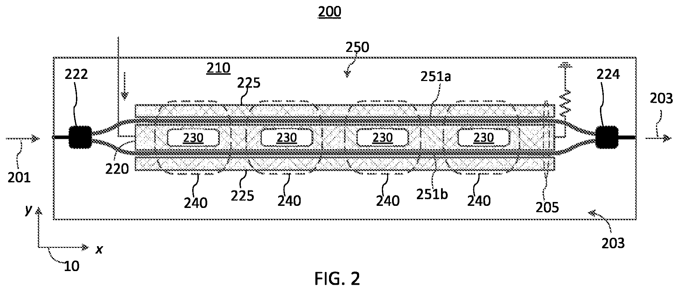

FIG. 2 schematically illustrates an example photonic IC 200 (PIC 200) including a planar optical Mach-Zehnder modulator (MZM) 250 disposed along a main surface 203 of a substrate 210. The optical MZM 250 includes two optical waveguide arms, 251a and 251b, which may be commonly referred to as the MZM arms. Each of the MZM arms 251a, 251b has an optical waveguide core including an electro-optical material, i.e. a material whose optical properties, e.g. the refractive index, may be varied by an applied electrical field, e.g. due to the Pockels effect or a second-order EO effect. By way of a non-limiting example, the electro-optical material of the waveguide arms 251a, 251b is LN, e.g. the thin-film LN (TFLN). The waveguide arms 251a, 251b are connected to receive light 201 in parallel from an optical splitter 222 and to transmit said light to an optical combiner 224, for recombination, after travelling along the waveguide arms 251a, 251b. In some embodiments, the optical splitter 222 and the optical combiner 224 may be formed with a different material than the waveguide arms 251a, 251b; e.g. the optical splitter 222 and the optical combiner 224 may be formed with silicon waveguides, while the waveguide arms 251a, 251b may be TFLN ridge waveguides, or may have hybrid waveguide cores including a TFLN or other suitable electro-optic material. In some embodiments, the optical splitter 222 and the optical combiner 224 may be located in a different layer of the PIC 200 than the waveguide arms 251a, 251b and may be optically coupled to the waveguide arms 251a, 251b with vertical couplers.

The optical MZM 250 further includes a middle TW electrode 220 extending along and between the waveguide arms 251a, 251b, and two outer TW electrodes 225 extending along the outer sides of the respective waveguide arms 251a, 251b. In this layout, each of the waveguide arms 251a, 251b is located between the middle TW electrode 220 and one of the outer TW electrodes 225. The middle and two outer TW electrodes 220, 225 form a three-electrode RF ETL 205 configured to support the propagation of an electrical RF drive signal for modulating co-propagating light in the waveguide arms 251a, 251b, e.g., in a push-pull manner. In the example illustrated in FIG. 2, the middle TW electrode 220 may be a signal electrode end-connected to an output of an RF driver (not shown) and the outer TW electrodes 225 may be ground electrodes. The middle TW electrode 220, which may be an example of the TWE 120 of FIG. 1A, has a sequence of openings 230 defined therein. The openings 230 are absent of the metallic material comprising the middle TW electrode 220, and through these openings 230 portions of the substrate 210 may be removed to form cavities 240, e.g. as described above with reference to the substrate 110 and the cavities 140 of FIGs. 1A-1C. In some implementations, the length 133 of the openings 130 in the longitudinal direction may be smaller than any wavelength λ_{RF} of the RF drive signal of the MZM 250 within the MZM bandwidth. The cavities 240 may extend laterally under the outer TW electrodes 225, reducing an effective permittivity of the substrate 210 for the RF waves travelling along the RF-ETL 205 to achieve velocity matching between the optical and RF waves. In an example implementation where the substrate 210 is semiconducting, e.g. a silicon substrate, the absence of the semiconducting material of the substrate 210 in the cavities or voids 240 under the RF-ETL 205 may also act to reduce RF absorption losses from the semiconductor substrate 210.

FIGs. 1A-1C and 2 illustrate example implementations wherein the split electrode segments 125 of the TWE 120 have about the same width, edge-to-edge (e.g. the width 131 of the opening 130 combined with the width 123 of each of the two metallic branches 122) as the connecting electrode segments 127 of the TWE 120. This is, however, not a requirement, and in other implementations the widths of the connecting electrode segments 127 of the TWE 120 may differ, e.g., may be smaller, than the edge-to-edge width of the split electrode segments 125. The ability to vary the width of the split electrode segments 125 and connecting electrode segments 127 provides an additional degree of freedom to optimize the RF-ETL performance. For example, in some implementations the total width of metallic elements in each TWE cross-section may be approximately maintained.

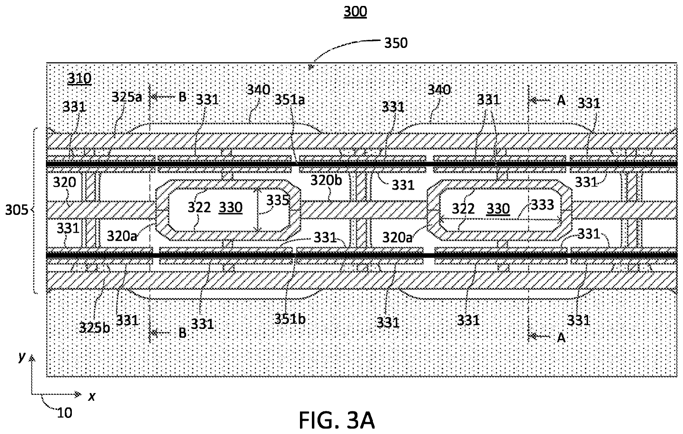

FIG. 3A shows, in a plan view, a portion of another example PIC 300. The PIC 300 incorporates an MZM 350 driven by a capacitively-loaded ETL 305 ("CL-ETL") that incorporates features of the present disclosure. Like the MZM 250, the MZM 350 includes two optical waveguide arms 351a and 351b formed with an electro-optical material. In the example implementation described below the electro-optical material of the waveguide arms 351a, 351b is, e.g., thin-film LN (TFLN), but other suitable electro-optical materials may also be used. Examples of such materials include, but are not limited to, ferroelectric materials other than LN, e.g. Lithium tantalate, barium titanate, PLZT (lead lanthanum zirconate titanate), semiconductor materials, and EO polymers. The waveguide arms 351a, 351b are connected to receive light in parallel from an optical splitter (not shown) and to transmit said light to an optical combiner (not shown), for recombination after travelling along the waveguide arms 351a, 351b.

The CL-ETL 305 includes a middle TW electrode 320 ("TWE 320") extending between the waveguide arms 351a, 351b, and two outer TW electrodes 325a and 325b extending along opposite sides of the waveguide arms 351a, 351b at some distance therefrom. The capacitive loading is provided by a sequence of metallic T-rail electrodes 331 that are connected in pairs to the middle TWE 320 and a respective one of the outer TWEs 325a, 325b to define narrow gaps where the waveguide arms 351a, 351b are located. The narrow gaps between the T-rail electrodes 331 of corresponding pairs increase the strength of the electrical field in the waveguide arms 351a, 351b, and the capacitance and inductance per unit length of the CL-TWEs can be adjusted relatively independently by adjusting the T-rail electrodes 331 and parameters (e.g. geometry and conductance) of the outer and middle TWEs 325a, 325b, and 320.

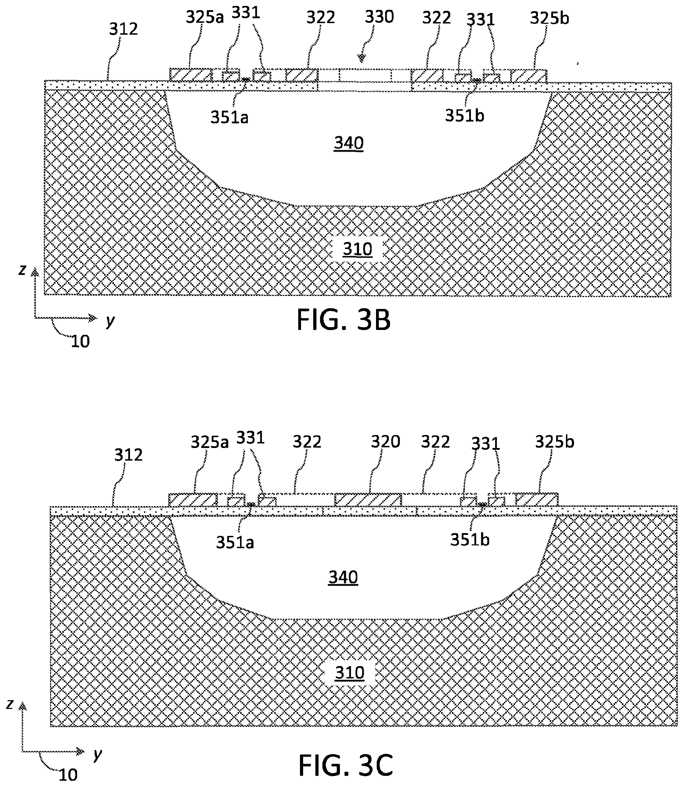

The RF loss reduction and/or the velocity matching between the electrical (RF) and optical signals in the MZM 350 may be further facilitated by the presence of openings 330 in the middle TWE 320, through which parts of the substrate 310 may be removed to form cavities 340 therein. These cavities 340 are also illustrated, e.g., in FIGs. 3B and 3C, which show vertical cross-sections of the MZM 350 along the lines "A-A" and "B-B", respectively, indicated in FIG. 3A.

In the example illustrated in FIGs. 3A-3C, the middle TWE 320 includes a sequence of split electrode segments 320a connected by straight connecting electrode segments 320b. In the split electrode segments 320a, the middle TWE 320 splits into a pair of metallic branches 322 surrounding a corresponding opening 330. The geometry of the split electrode segments 320a may be selected so as not to perturb the RF signal propagation along the CL-ETL 305 while enabling the removal of a portion of the substrate material to form the substrate-undercutting cavities 340 of a sufficient size. In the illustrated example, each of the split electrode segments 320a and the connecting electrode segments 320b of the middle TWE 320 is physically connected to a pair of the T-rail electrodes 331 projecting toward respective waveguide arms 351a, 351b. In some implementations one or more of the split electrode segments 320a and/or one or more of the connecting electrode segments 320b may have no T-rail electrodes 331 projecting therefrom. In some implementations, one or more of the split electrode segments 320a, and/or one or more of the connecting electrode segments 320b may have two or more T-rail electrodes 331 projecting therefrom.

In some implementations, the width of each of the metallic branches 322 may be about half of the width of the middle TWE 320 between the split electrode segments 320a. In some implementations, the length 333 of the openings 330 may be smaller than the shortest wavelength of an RF drive signal that may be propagating along the CL-ETL 305 in operation. In some implementations, the openings 330 may have a width 335 in a range, e.g. from about 5µm to about 100µm or greater, depending on, e.g., the distance between the waveguide arms 351a, 351b. The length 333 of the openings 330 may be, e.g., from about 20µm to about 200µm or greater. By way of example, the width 335 may be, e.g., 30-50µm, and the length 333 may be, e.g., 100-150µm. The width of the metallic branches 322 may be, e.g., in a range from about 1 to about 50 µm, or from about 3 to about 20 µm in some typical implementations. The width of the connecting electrode segments 320b may be, e.g., in a range from about 5 to about 200 µm, or from about 10 to about 70 µm in some typical implementations.

FIGs. 3B and 3C schematically illustrate vertical cross-sections of an example implementation of the MZM 350 along the lines "A-A" and "B-B", respectively. Elements that are not in the plane of the figures are indicated by dotted lines. In this example, the CL-ETL 305 and the optical waveguide arms 351 are disposed over a buffer layer 312 that is in turn disposed over the substrate 310. The substrate 310 may be a semiconductor substrate, and the buffer layer 312 may be a layer of dielectric material that insulates the CL-ETL 305 from the semiconductor substrate 310 and may also serve as optical cladding for the waveguide arms 351a and 351b. In an example implementation, the substrate 310 is a silicon substrate, and the buffer layer 312 is a layer of silicon dioxide. The metallic T-rail electrodes 331 may be thinner than the outer and middle TWEs 325 and 320. By way of example, the middle and outer TWEs 320, 325 may be, e.g., about 1 to 10 µm thick, while the T-rail electrodes 331 may be, e.g., about 0.1 to 1 µm thick. The buffer layer 312 may be, e.g., 1 to 10 µm thick. In the illustrated example, the cavity 340 extends laterally under the outer TWEs 325, and may be, e.g., in a range of 50µm to 250µm, e.g. about 150 µm. Note that the depth profile of the cavity 340 may differ from that illustrated in FIGs. 3B and 3C, FIGs. 4-6, 8E described below, e.g., it may have an approximately semi-circular boundary.

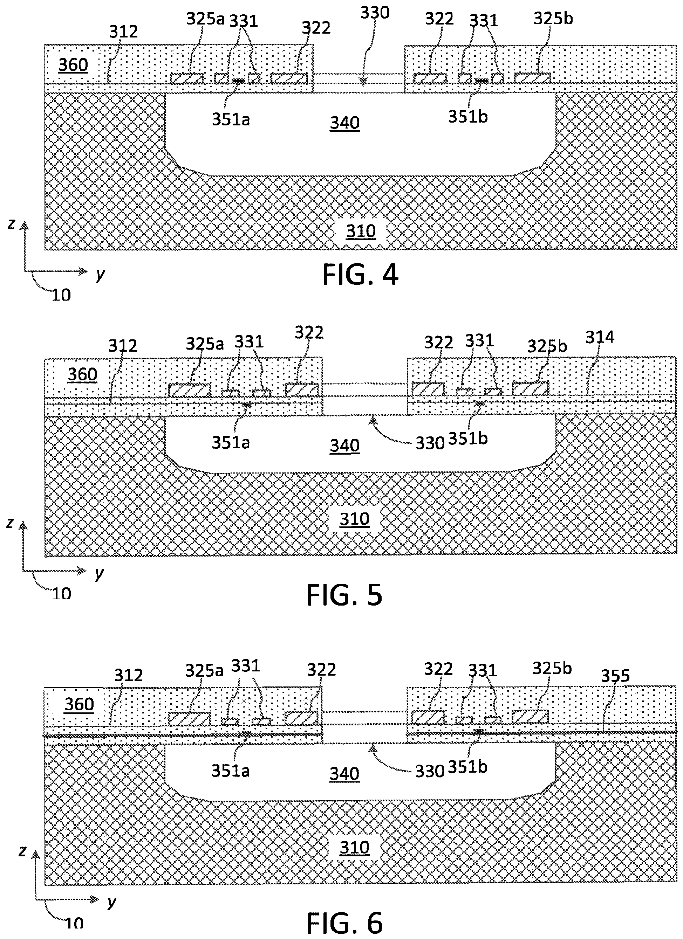

FIGs. 4-6 illustrate some example variations of the layer structure of the MZM 305. In all three figures, a vertical cross-section of the MZM 350 along the "A-A" line in FIG. 3A, i.e. through one of the openings 330 in the middle TWE 320, is shown. In the example of FIG. 4, a top layer 360 of dielectric material, e.g. SiO2, is added over the CL-ETL 305 and the optical waveguide arms 351a and 351b. This layer may be absent over the opening 330. In the example of FIG. 5, the electrodes of the CL-ERL 305 are disposed over an intermediate dielectric layer 314 covering the optical cores of the waveguide arms 351. In the example of FIG. 6, optical cores of the waveguide arms 351a and 351b are formed as ridges in an EO layer 355 made of electro-optical material, e.g. the TFLN.

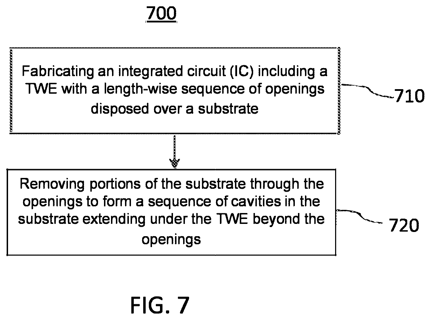

Referring to FIG. 7, an aspect of the present disclosure provides a method 700 for fabricating an ETL with periodic substrate undercutting. In the example illustrated in FIG. 7, method 700 may include (710) fabricating an integrated circuit (IC) (e.g., 100, 200, or 300), including an ETL (e.g. 205, 305) comprising at least one TWE (e.g. 120, 220, or 320) having a length wise distributed sequence of openings (e.g. 130, 230, or 330). Method 700 may further include (720) removing portions of the substrate through the openings to form a sequence of cavities (e.g. 140, 240, or 340) in the substrate. In some implementations, the cavities may extend under the TWE beyond the openings, undercutting one or more of the other TWEs (e.g. 225, 325) of the ETL. In some implementations, step (720) may include using a selective etch process to remove the portions of the substrate. In some implementations, method 700 may include masking the IC to selectively expose to the etch portions of the IC surface over the openings. A variation of method 700 may include removing portions of the substrate through openings in one or more layers (e.g. 115, 312, and/or 755) disposed over the substrate, followed by metal deposition and patterning of the metal to fabricate the TWE that extends along and around the sequence of openings in the buffer layer.

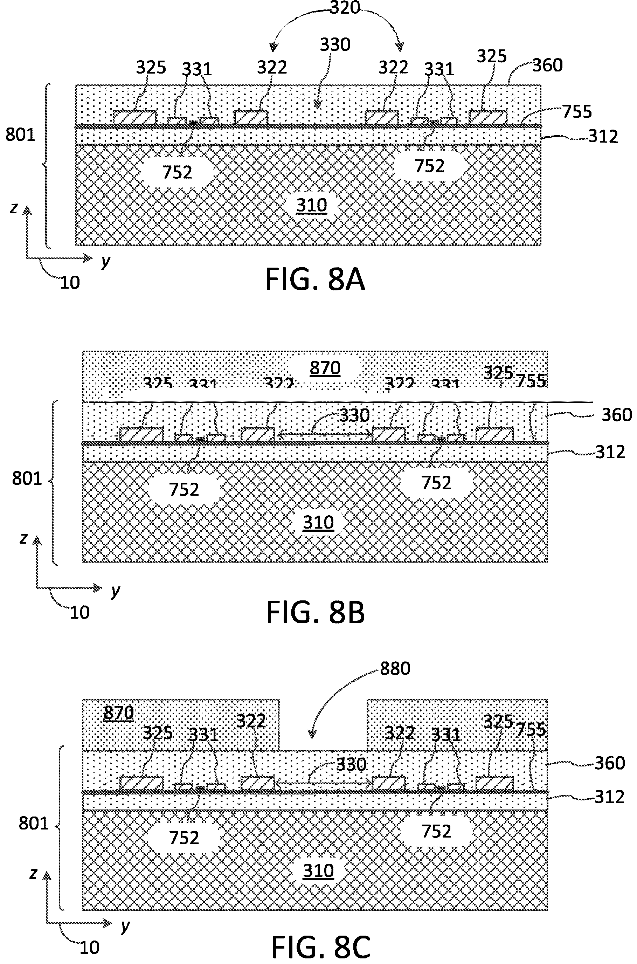

FIGs. 8A - 8E illustrate an example implementation of method 700 as may be used in fabricating the MZM 350 of the PIC 300. These figures show a vertical cross-section of the PIC through one of the electrode openings 330 at different fabrication stages. It will be appreciated that FIGs. 8A-8E may show only a subset of layers that may be present in various real-life implementations. The method may start with fabricating an MZM structure 801 that is illustrated in FIG. 8A. In the illustrated example, the TWEs 320, 325 and the T-rail electrodes 331 are disposed over a continuous TFLN layer 755 that includes two ridges 752 forming optical cores of the corresponding waveguide arms 351a and 351b.

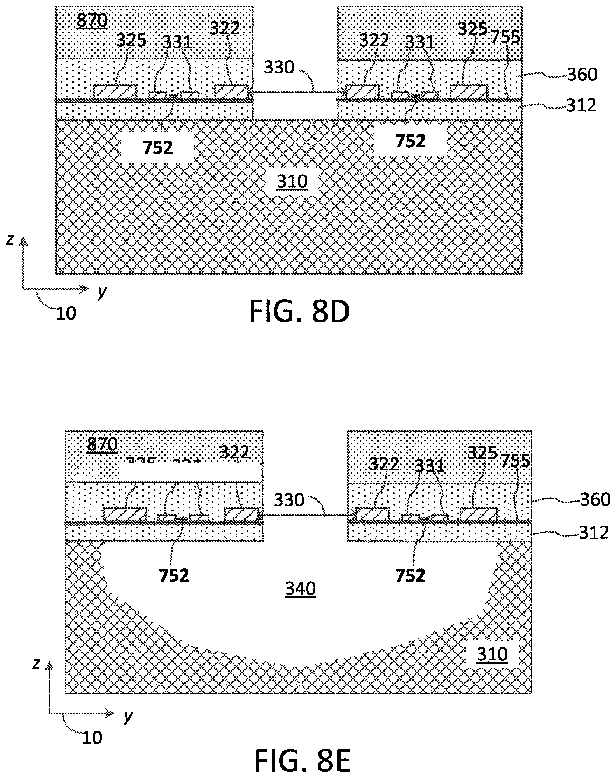

Initially, the opening 330 in the middle TWE 320 may be covered by a dielectric top layer 360 and have continuous TFLN (715) and insulation buffer (312) layers underneath the electrode opening 330. In an example implementation, the dielectric top layer 360 may be an oxide layer, e.g., SiO₂. Other dielectric materials may also be used, including but not limited to silicon nitride and silicon oxynitride. The MZM structure 801 may then be covered with a suitable masking layer 870, as illustrated in FIG. 8B, which may then be patterned to create exposed PIC areas 880 at least partially exposing a top portion of the MZM structure 801 over the electrode opening 330. In an example implementation, the masking layer 870 comprises photoresist, which may be patterned using photolithography to open the exposed PIC areas 880 over the electrode openings. Next, the exposed PIC areas 880 may then be etched to first remove the dielectric top, e.g. oxide, and insulation buffer layers 360 and 312 and, when present, the TFLN layer 755, to expose the substrate 310 under the electrode openings 330 (FIG. 8D). The processing may then proceed with a suitable etch technique to remove portions of the substrate 310 under the electrode opening 330 to form a void or cavity 340 in the substrate 310, preferably undercutting the substrate 310 underneath the outer TWEs 325 (FIG. 8E). Etching techniques to fabricate the structures illustrated in FIGs. 8D and 8E may vary, e.g., depending on the materials of the substrate 310 and the dielectric top and insulation buffer layers 360 and 312, or any other layers that may be present in the PIC. In an example implementation, the substrate 310 may be a silicon substrate, and the substrate undercutting may be performed using a dry or wet etching technique suitable for etching of silicon.

The foregoing description of example embodiments is not intended to be exhaustive or to limit the disclosure to the precise form described. Many modifications and variations are possible in light of the above teaching. For example, in various implementations the substrates 110, 210, or 310 may be formed with semiconductor materials other than silicon, including but not limited to GaAs and InP, or maybe a dielectric substrate, such as quartz; in such implementations, the buffer layers 115, 312, when present, may be formed with suitable dielectric and/or polymeric materials, e.g. as commonly used in the art for ICs or PICs based on corresponding material systems. Furthermore, any of the ICs and PICs described above may include one or more layers other than those shown in FIGs. 1-8. In some embodiments, the waveguide arms 251a, 251b, and 351a, 351b may include semiconductor materials such as but not limited to silicon, which in some embodiments may include p-n or p-i-n junctions. In some embodiments, e.g., when the substrate 110, 210, or 310 comprises dielectric material, the insulation buffer layer separating the TWE from the substrate, e.g. 115 or 312, may be absent. In some embodiments, parts of the insulation buffer layer overhanging the cavities 140 or 340 may be etched away.

According to an example embodiment disclosed above, e.g., in the summary section and/or in reference to any one or any combination of some or all of FIGs. 1A-8E, provided is an apparatus comprising an integrated circuit (e.g., 100, FIGs. 1A-1C; 200, FIG. 2; 300, FIGs. 3A-3C). The integrated circuit comprises a substrate (e.g., 110, FIGs. 1A-1C; 210, FIG. 2; 310, FIGs. 3A-6, 8A-8E) having a main surface (e.g., 103, FIGs. 1A-1C, 203, FIG. 2) and an electrical transmission line (e.g., 205, FIG. 2; 305, FIG. 3) extending along the main surface. The electrical transmission line comprises a first (middle) travelling wave electrode (TWE) (e.g., 120, FIGs. 1A-1C; 220, FIG. 2; 320, FIGs. 3A-3C, 8A) the first (middle)TWE comprising metallic material, and a lengthwise sequence of spaced apart openings (e.g., 130, FIGs. 1A and 1C; 230, FIG. 2; 330, FIG. 3A, 3B, 4-6, 8A-8E) absent of the metallic material, wherein the substrate has cavities (e.g., 140, FIG. 1A, 1C; 240, FIG. 2; 340, FIGs. 3A-3C, 4-6, 8E) under at least some of the openings.

In at least some implementations, the cavities extend laterally beyond the openings.

In any of the above implementations, the first (middle) TWE (e.g. 120, FIG. 1A; 200, FIG. 2; 320, FIG. 3) may comprise a sequence of split electrode segments (e.g. 125, FIG. 1A; 320a, FIG. 3), each split electrode segment comprising a pair of split metallic branches (e.g. 122, FIGs. 1A, 1C; 322, FIGs. 3A, 3B, 3C, 4-6, 8A-8E) bounding one of the openings.

In any of the above implementations, the first (middle) TWE (e.g., 320, FIG. 3A) may be wider in the split electrode segments than in the connecting electrode segments (e.g. 127, FIG. 1A, 320b FIG. 3).

In any of the above implementations, the electrical transmission line may also comprise at least one second (outer) TWE (e.g. 225, FIG. 2; 325A, FIG. 3A) extending along the first (middle) TWE. In some of such implementations, the cavities may extend under the second (outer)TWE.

In any of the above implementations, the electrical transmission line may comprise a pair of second (outer) TWEs (e.g. 225, FIG. 2; 325A and 325B, FIG. 3A) extending along the first (middle) TWE at opposite sides thereof. In some of such implementations, the cavities extend under the second (outer) TWEs.

In any of the above implementations, the integrated circuit may be a photonic integrated circuit (PIC) (e.g., 200, FIG. 2; 300, FIG. 3). In some implementations, the PIC may comprise a Mach-Zehnder modulator (MZM) (e.g., 250, FIG. 2; 350, FIG. 3A), the MZM comprising two optical waveguide arms (e.g., 251a and 251b, FIG. 2; 351a, 351b, FIGs. 3A-3C, 4-6) and the electrical transmission line. In some of such implementations the substrate (e.g., 110, FIGs. 1A-1C; 210, FIG. 2; 310, FIGs. 3A-6, 8A-8E) may comprise semiconductor material. In some of such implementations, the semiconductor material is silicon. In some of such implementations, the optical waveguide arms of the MZM may comprise lithium niobate.

In any of the above implementations, wherein the electrical transmission line comprises a pair of second (outer) TWEs extending along the first (middle) TWE at opposite sides thereof, the first (middle) TWE may be between the two optical waveguide arms of the MZM, and the two optical waveguide arms of the MZM may be between the second (outer) TWEs. In any such implementations, the electrical transmission line may be capacitively loaded by a plurality of metallic T-rail structures (e.g., 331, FIGs. 3A-3C, 4-6, 8A-8E) disposed to modulate light propagating in the optical waveguide arms. At least some of the metallic T-rail structures may project from parts (e.g. 322) of the first (middle) TWE bounding at least some of the openings.

Any of the above implementations may comprise a buffer layer (e.g., 115, FIGs. 1B-1C; 312, FIGs. 3A-6, 8A-8E) between the substrate and the electrical transmission line, the openings extending through the buffer layer. In some of such implementations (e.g., FIG. 1C; FIGs. 3A-6, 8A-8E) the cavities (140, 340) may extend under the buffer layer.

A related aspect of the present disclosure provides a method (e.g. 700, FIG. 7) comprising fabricating an electrical transmission line extending along a main surface of a substrate, the electrical transmission line comprising a first travelling wave electrode (TWE), the first TWE comprising metallic material and a lengthwise sequence of spaced apart openings that are absent of the metallic material. The method further comprises removing parts of the substrate through the openings to form cavities in the substrate.

In at least some implementations of the method, the removing may be performed such that the cavities extend laterally beyond the first TWE. In at least some of the implementations, the removing comprises etching the substrate through the openings in the first TWE.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims. Various features described above with reference to a specific embodiment or embodiments may be combined with other embodiments.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Furthermore in the description above, for purposes of explanation and not limitation, specific details are set forth such as particular architectures, interfaces, techniques, etc. in order to provide a thorough understanding of the present invention. In some instances, detailed descriptions of well-known devices, circuits, and methods are omitted so as not to obscure the description with unnecessary detail. Thus, for example, it will be appreciated by those skilled in the art that block diagrams herein can represent conceptual views of illustrative circuitry embodying the principles of the technology. All statements herein reciting principles, aspects, and embodiments, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

## Claims

1. An apparatus comprising:
an integrated circuit comprising:
a substrate having a main surface; and
an electrical transmission line extending along the main surface, the electrical transmission line comprising a first travelling wave electrode (TWE), the first TWE comprising metallic material;
wherein the first TWE further comprises a lengthwise sequence of spaced apart openings absent of the metallic material, and wherein the substrate has cavities etched under at least some of the openings.

2. The apparatus of claim 1, wherein the cavities extend laterally beyond the openings.

3. The apparatus of claim 1 wherein the first TWE comprises a sequence of split electrode segments, each split electrode segment comprising a pair of split metallic branches bounding one of the openings.

4. The apparatus of claim 3 wherein the first TWE further comprises connecting electrode segments between the split electrode segments and wherein the split electrode segments are wider than the connecting electrode segments.

5. The apparatus of claim 1 wherein the electrical transmission line comprises at least one second TWE extending along the first TWE, and wherein the cavities extend under the second TWE.

6. The apparatus of claim 1, wherein the electrical transmission line comprises a pair of outer TWEs extending along the first TWE at opposite sides thereof, and wherein the cavities extend under each outer TWE.

7. The apparatus of claim 6 wherein the integrated circuit is a photonic integrated circuit (PIC).

8. The apparatus of claim 7 wherein the PIC comprises a Mach-Zehnder modulator (MZM), the MZM comprising two optical waveguide arms and the electrical transmission line.

9. The apparatus of claim 8 wherein the first TWE is between the two optical waveguide arms of the MZM, and the two optical waveguide arms of the MZM are between the pair of outer TWEs.

10. The apparatus of claim 9, wherein the electrical transmission line is capacitively loaded by a plurality of metallic T-rail structures disposed to modulate light propagating in the two optical waveguide arms.

11. The apparatus of claim 10, wherein at least some of the metallic T-rail structures project from parts of the first TWE bounding at least some of the openings.

12. The apparatus of claim 8 further comprising a buffer layer between the substrate and the electrical transmission line, the openings extending through the buffer layer.

13. The apparatus of claim 12 wherein the cavities extend under the buffer layer.

14. The apparatus of claim 8 wherein the substrate comprises semiconductor material, and wherein the optical waveguide arms of the MZM comprise lithium niobate.

15. A method of making the apparatus of any of claims 1-14, the method comprising:
fabricating an electrical transmission line extending along a main surface of a substrate, the electrical transmission line comprising a first travelling wave electrode (TWE), the first TWE comprising metallic material and a lengthwise sequence of spaced apart openings that are absent of the metallic material;
removing parts of the substrate through the openings to form cavities in the substrate.
